# EUROPEAN PATENT SPECIFICATION

(11) **EP 4 654 058 B1**
(45) Date of publication and mention of the grant of the patent: **12.08.2026**
(21) Application number: 25159280.4
(22) Date of filing: 21.02.2025
(51) Int. Cl.: G06F 21/57

(54) **SECURITY MEASURE DETERMINATION APPARATUS AND SECURITY MEASURE DETERMINATION METHOD**
VORRICHTUNG ZUR BESTIMMUNG EINER SICHERHEITSMASSNAHME UND VERFAHREN ZUR BESTIMMUNG EINER SICHERHEITSMASSNAHME
APPAREIL DE DÉTERMINATION DE MESURE DE SÉCURITÉ ET PROCÉDÉ DE DÉTERMINATION DE MESURE DE SÉCURITÉ

(30) Priority: 20.05.2024 JP 2024081985
(43) Date of publication of application: 26.11.2025
(73) Proprietor: Hitachi, Ltd., Tokyo 100-8280 (JP)
(72) Inventor: SAKATA, Kosei, Tokyo, 100-8280 (JP); OGURA, Takashi, Tokyo, 100-8280 (JP); NAGAYAMA, Tsuyoshi, Tokyo, 100-8280 (JP)
(74) Representative: MERH-IP Matias Erny Reichl Hoffmann Patentanwälte PartG mbB

(56) References cited:
- JP-A- 2015 130 152
- US-A1- 2019 182 368
- US-A1- 2021 288 989
- US-A1- 2022 179 966

## Description

### CLAIM OF PRIORITY

The present application claims priority from Japanese patent application JP 2024-081985 filed on May 20, 2024.

### BACKGROUND OF THE INVENTION

This invention is related to a security measure determination apparatus and a security measure determination method.

Increasing cyberattacks on operational technology (OT) systems including critical infrastructures are prompting formulation of legal provisions for cyber security. In Europe, the European Cyber Resilience Act was announced in 2022; it requires security measures to be taken in all Internet of Things (IoT) devices distributed in the European Union (EU), except for digital products related to medicine, aviation, national defense, and automobiles.

Regarding the European Cyber Resilience Act, enforcement during the year of 2025 has been discussed. The business operators that violate the European Cyber Resilience Act will be charged with penalties and therefore, the companies dealing IoT devices have to urgently take security measures that will work throughout the life cycles of their products.

In Japan, Economic Security Promotion Act was enacted in May, 2022 in view of the risk of cyberattacks targeted on infrastructure companies and a scheme is started in February 2024, where when a Japanese domestic infrastructure company is going to have important facilities, the Japanese government examines the plan so that infrastructure services such as power supply, communication, and financial services will be provided stably.

In view of the trend of the security regulations within and outside Japan, the infrastructure companies are demanded to address the rules including security acts and regulations for the OT systems and OT products of themselves and/or their clients.

The background art in the technical field of this invention includes WO 2019/138542 A (Patent Document 1). This patent document states: On the basis of design information about a subject, a threat analysis part identifies a threat which may occur with the subject, and identifies as a first countermeasure a countermeasure for preventing the identified threat. On the basis of the design information and specification information indicating a specification relating to security applied to the subject, a specification adoption part identifies as a second countermeasure a countermeasure for meeting the specification indicated by the specification information. A coupling part couples the first countermeasure with the second countermeasure and generates a secure design (Abstract). Additionally, US 2021 / 288 989 A1 (Patent Document 2) discloses a method and apparatus for determining and prioritizing security measures based on system and component constraints and requirements, with an emphasis on compliance of security implementations within OT systems.

### SUMMARY OF THE INVENTION

To ensure the cyber security of a system, it is necessary not only to conform to the aforementioned rules but also to consider the constraints specific to the subsystems and components included in the system. Accordingly, much time and cost are expected to implement security measures.

The technique according to Patent Document 1 does not consider the constraint conditions for the incorporated subsystems and apparatuses in designing the security measures for the system. Accordingly, this technique can select a security measure that satisfies the requirements of the regulations but its implementation to the subsystems and components may have a problem.

An aspect of this invention provides a system with security measures that not only conform to the security rules but also are applicable to the system.

The invention is set out in the appended set of claims. Preferable embodiments are defined in the dependent claims.

The aspect of this invention can provide a system with security measures that not only conform to the security rules but also are applicable to the system.

Problems, configurations, and effects which are not mentioned above are explained in the following embodiments.

### BRIEF DESCRIPTION OF THE DRAWINGS

FIG. 1 is a block diagram illustrating an example of a hardware configuration of a security measure determination apparatus according to EMBODIMENT 1.
FIG. 2 is a block diagram illustrating an example of a functional configuration of the security measure determination apparatus according to EMBODIMENT 1.
FIG. 3 is a diagram illustrating an example of a data configuration of system information according to EMBODIMENT 1.
FIG. 4 is a diagram illustrating an example of a data configuration of component information according to EMBODIMENT 1.
FIG. 5 is a diagram illustrating an example of a data configuration of constraint condition information according to EMBODIMENT 1.
FIG. 6 is a flowchart of an example of processing to identify roles of components according to EMBODIMENT 1.
FIG. 7 is a diagram illustrating an example of a data configuration of security regulation database according to EMBODIMENT 1.
FIG. 8 is a diagram illustrating an example of a data configuration of role information according to EMBODIMENT 1.
FIG. 9 is a diagram illustrating an example of a configuration of possible measure database according to EMBODIMENT 1.
FIG. 10 is a flowchart of an example of measure determination processing according to EMBODIMENT 1.
FIG. 11 is a diagram illustrating an example of a layout of an implementation location indication screen according to EMBODIMENT 1.
FIG.12 is a flowchart of an example of measure determination processing according to EMBODIMENT 2.
FIG. 13 is a diagram illustrating an example of a layout of an implementation location indication screen according to EMBODIMENT 2.

### DETAILED DESCRIPTION OF THE EMBODIMENTS

Hereinafter, embodiments of determining a security measure and an apparatus therefor are described with reference to the drawings. Although the embodiments described herein include technically preferable limitations to implement the disclosure, the limitations are not to limit the scope of the disclosure to the embodiments. Throughout the drawings and the embodiments described in the specification, analogous elements are assigned the same reference signs to omit their description as appropriate.

In the embodiments, a security measure determination apparatus determines and presents security measures for an OT system including a critical infrastructure and apparatuses or devices (OT products) that are the components of the OT system; however, the security measure determination apparatus can determine and present security measures for any system other than the OT system (e.g., an information technology (IT) system), using the same methods as those described in the following.

### EMBODIMENT 1

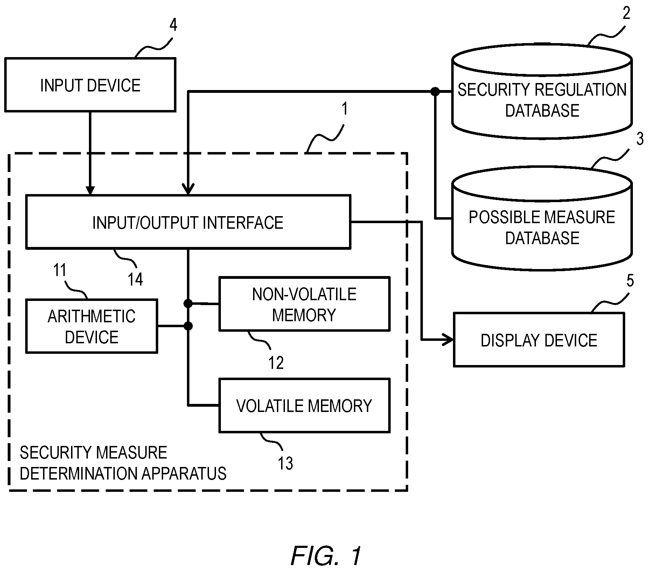

A security measure determination apparatus and a security measure determination method in Embodiment 1 are described with reference to FIGS. 1 to 11,

FIG. 1 is a block diagram illustrating an example of the hardware configuration of a security measure determination apparatus 1. The security measure determination apparatus 1 determines security measures for an OT system and components (apparatuses) included in the OT system. The OT system is an example of a system to be secured.

Particularly, the security measure determination apparatus 1 presents security measures for the OT system and the components included in the OT system to the user. The user can take security measures that are applicable to the OT system and the components of the OT system with reference to the result output from the security measure determination apparatus 1. Hereinafter, the OT system is also simply referred to as system.

An example of the security measure determination apparatus 1 is configured of a computer including an arithmetic device 11, a non-volatile memory 12, a volatile memory 13, an input/output interface 14, and other peripheral circuits. These hardware components cooperate together to run software to implement a plurality of functions.

The arithmetic device 11 is an example of a processor; it can be configured of a central processing unit (CPU), a micro-processing unit (MPU), a digital signal processor (DSP), and/or the like.

The non-volatile memory 12 can include a read-only memory (ROM) to be used as a primary storage device, and a flash memory and a hard disk drive to be used as auxiliary storage devices. The volatile memory 13 can include a random-access memory (RAM) to be used as a primary storage device.

The security measure determination apparatus 1 can be a computer system configured of one physical computer or a plurality of logical or physical computers; it can run on different threads of a computer or virtual machines configured of a plurality of physical computer resources.

The arithmetic device 11 can also be an application-specific integrated circuit (ASIC) or a field-programmable gate array (FPGA).

A flash memory and a hard disk drive, which are examples of the non-volatile memory 12, store programs to be executed by the arithmetic device 11 and data to be used in executing the programs. In other words, the non-volatile memory 12 is a storage medium (storage device) from which the programs for implementing the functions of the embodiments can be read. A ROM, which is another example of the non-volatile memory 12, stores invariable programs (e.g., basic input/output system (BIOS)).

A RAM, which is an example of the volatile memory 13, is a storage medium (storage device) for temporarily storing programs to be executed by the arithmetic device 11, data to be used in executing the programs, and signals input from the input/output interface 14.

The arithmetic device 11 deploys a program stored in the non-volatile memory 12 onto the volatile memory 13 and executes calculation. The arithmetic device 11 performs predetermined arithmetic operation on the data retrieved from the input/output interface 14, the non-volatile memory 12, or the volatile memory 13 in accordance with the program.

The input/output interface 14 is an interface device that is connected to an input device 4 and a display device 5 to receive inputs from the operator and to output execution results of the programs in a form the operator can visually recognize. A keyboard and a mouse are examples of the input device 4. A device having a display screen such as a liquid crystal monitor and a printer are examples of the display device 5. The input/output interface 14 can further have functions of a network interface device for controlling communication with external devices in accordance with a predetermined protocol.

The security measure determination apparatus 1 is also connected to a security regulation database 2 and a possible measure database 3 through the input/output interface 14. The security regulation database 2 and the possible measure database 3 are databases storing predetermined data. The specifics of the data stored in the security regulation database 2 and the possible measure database 3 are described later. The security regulation database 2 and the possible measure database 3 can be stored in the non-volatile memory 12 and/or the volatile memory 13.

In the embodiments, the information to be used by the security measure determination apparatus 1 does not depend on the data structure; it can be expressed in any data structure. For example, a data structure appropriately selected from table, list, database, and queue can store the information.

The input unit of the input/output interface 14 converts input data signal from the input device 4 and signals received from the security regulation database 2 and the possible measure database 3 into data operable for the arithmetic device 11. The output unit of the input/output interface 14 generates an output signal corresponding to a calculation result of the arithmetic device 11 and outputs the signal to the display device 5.

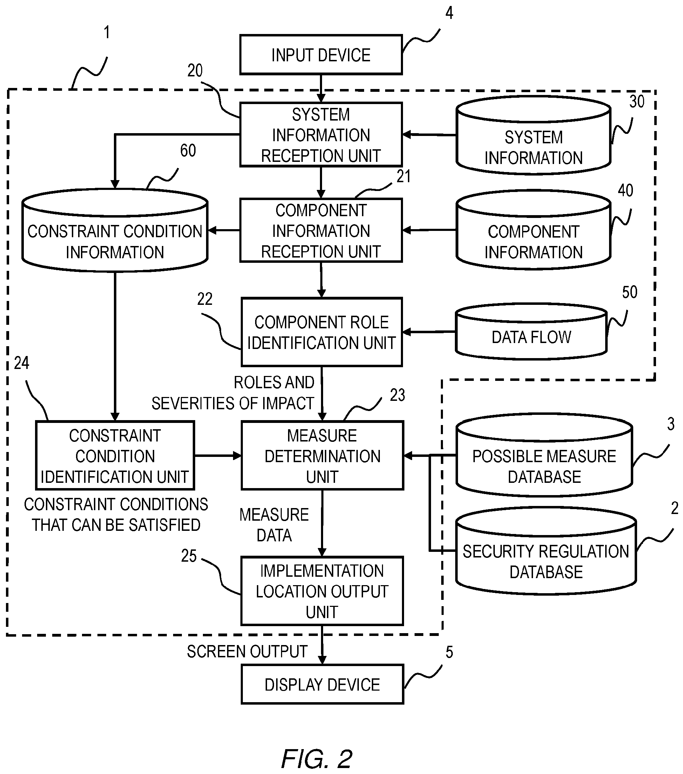

FIG. 2 is a block diagram illustrating an example of the functional configuration of the security measure determination apparatus 1. An example of the security measure determination apparatus 1 includes a system information reception unit 20, a component information reception unit 21, a component role identification unit 22, a measure determination unit 23, a constraint condition identification unit 24, and an implementation location output unit 25. These units are all function units.

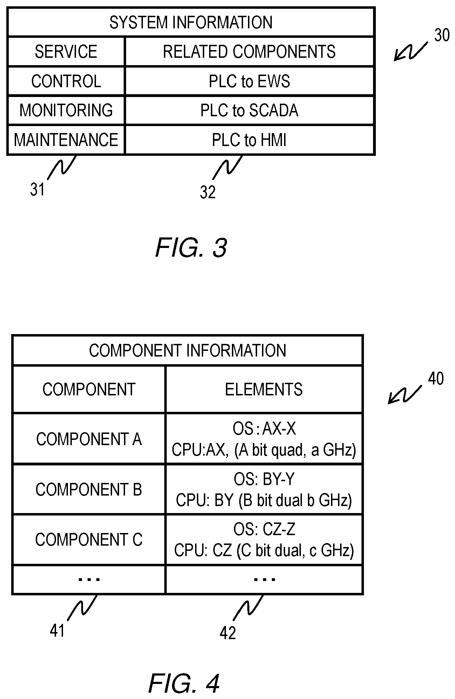

The system information reception unit 20 displays a user interface on the display device 5 to enable the user to input system information 30 with the input device 4 and outputs the system information 30 input by the user to constraint condition information 60 and component information reception unit 21. The system information 30 stores information indicating the services provided by the system. Examples of the services can include monitoring, control, and maintenance. The specifics of the system information 30 are described later with reference to FIG. 3.

The system includes one or more subsystems each of which performs a service. That is to say, the services provided by the system mean all the services to be performed by the subsystems included in the system. Each subsystem is composed of some or all of the components included in the system. Taking an example where the services provided by the system are monitoring, control, and maintenance, each of the monitoring, control, and maintenance is performed by one of the subsystems included in the system.

It should be noted that one subsystem can perform only one service or a plurality of services. One service can be performed by a plurality of subsystems. One or more, or all of the components included in a subsystem can be shared or should not be shared by other subsystems. One subsystem can consist of a single component or a plurality of components. Each component included in the system should belong to at least one of the subsystems or the system can include one or more components that do not belong to any subsystem.

The component information reception unit 21 displays a user interface on the display device 5 to enable the user to input component information 40 with the input device 4 and outputs the component information 40 input by the user to the constraint condition information 60 and the component role identification unit 22. The specifics of the component information 40 are described later with reference to FIG. 4.

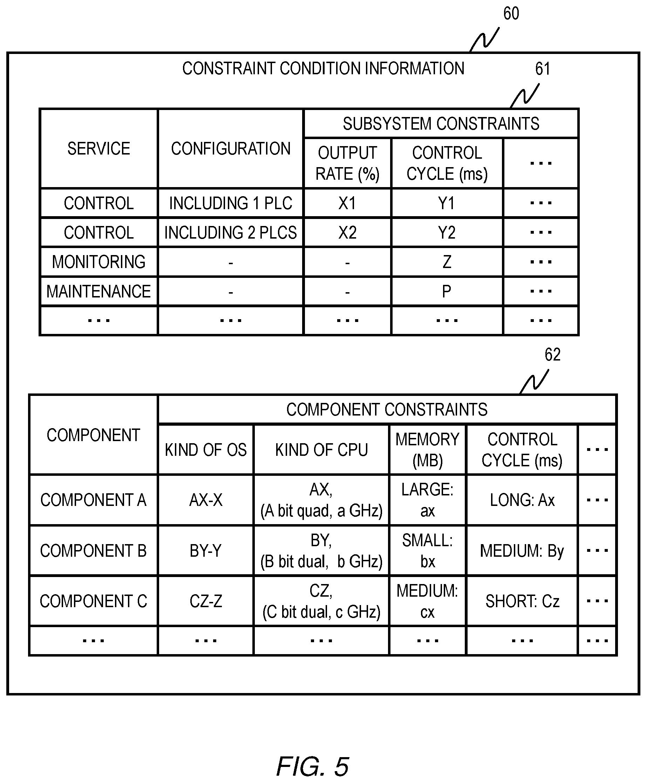

The constraint condition information 60 indicates constraint conditions for the subsystems and components (e.g., conditions on the output rate and the operating state of each subsystem and constraint conditions on the specifications of each component) generated from the system information 30 and the component information 40, and/or information input by the user with the input device 4. The generated constraint conditions indicated by the constraint condition information 60 is transmitted is transmitted to the constraint condition identification unit 24. The specifics of the constraint condition information 60 are described later with reference to FIG. 5.

The constraint condition identification unit 24 identifies constraint conditions that can be satisfied by a subsystem and/or a component included in the system from the constraints required for the subsystem and/or the component to implement a specific security measure and outputs the identified constraint conditions to the measure determination unit 23.

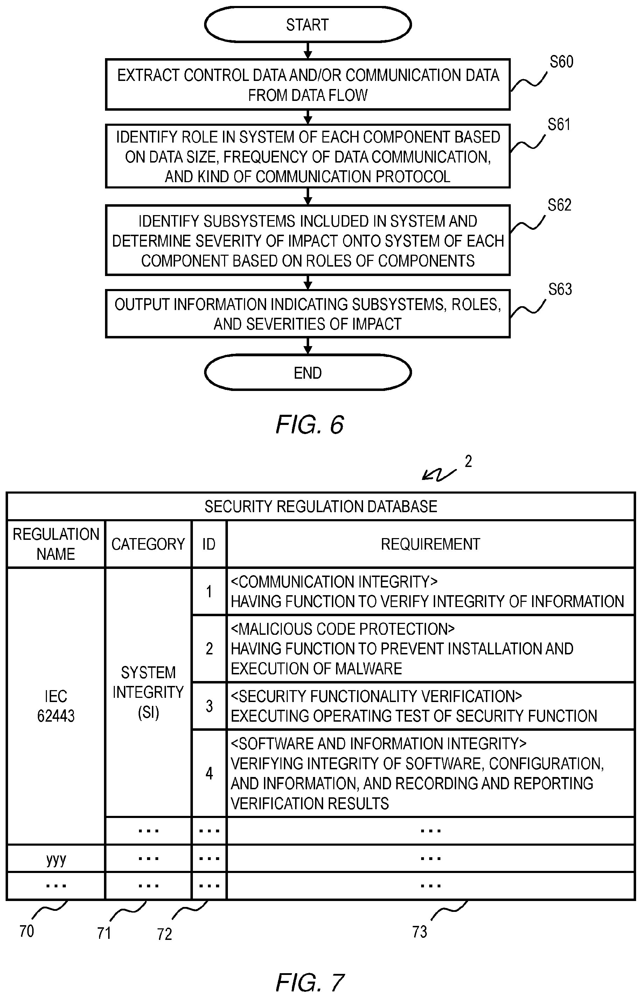

The component role identification unit 22 identifies the role in the system and the severity of impact onto the system of each component based on the data flow 50 of the system and the component information 40 acquired from the component information reception unit 21 and sends the information on the role and the severity of impact of the component to the measure determination unit 23. The internal processing of the component role identification unit 22 is described later with reference to FIG. 6.

The data flow 50 includes data such as data sent and received by each component in the system to and from the other components in the system, data generated by each component when services are performed in the system, and data sent and received by each component in the system to and from other systems.

The measure determination unit 23 determines a subsystem to be a secure zone in the system using the aforementioned role and severity of impact of each component, constraint conditions determined by the constraint condition identification unit 24 that the system can satisfy, and the possible measure database 3, and further determines a security measure required for the subsystem itself and security measures required for the components in the subsystem.

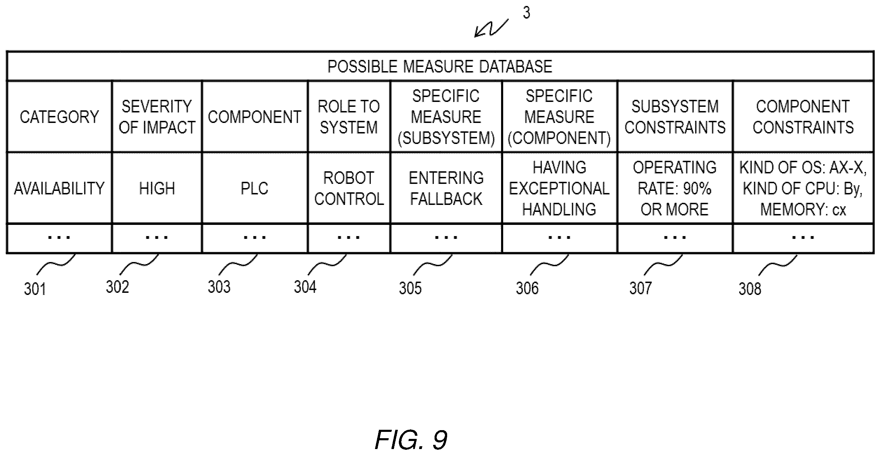

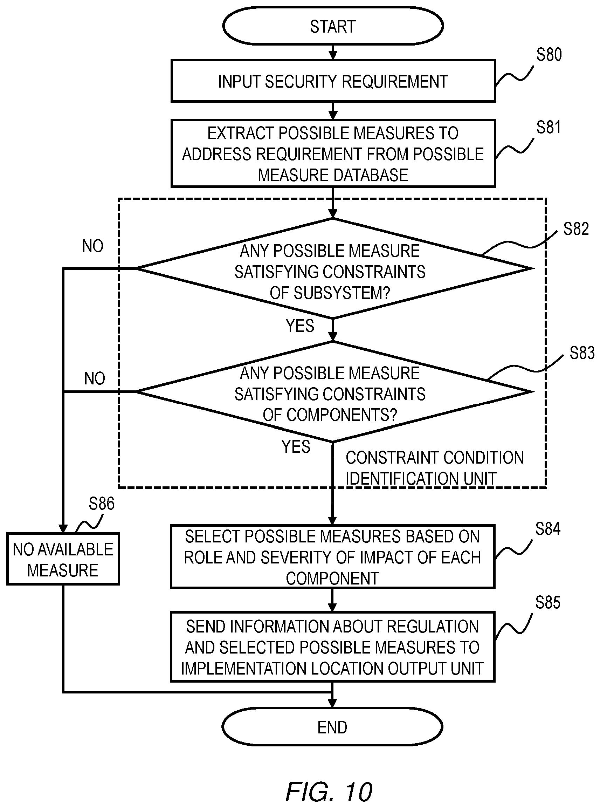

The security regulation database 2 is described later with reference to FIG. 7. The security regulation database 2 can be generated beforehand. The possible measure database 3 is described later with reference to FIG. 9. The possible measure database 3 can be generated by the security measure determination apparatus 1 or generated beforehand by an external system. The specifics of the processing of the measure determination unit 23 is described later with reference to FIG. 10.

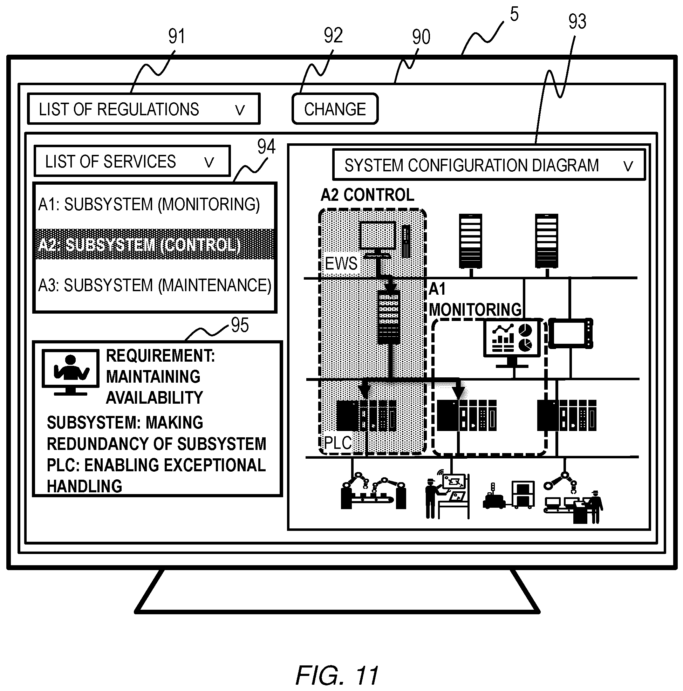

The implementation location output unit 25 outputs the security measures determined by the measure determination unit 23 together with the applied regulation to the display device 5 to inform the user of them. The screen to be displayed by the implementation location output unit 25 on the display device 5 is described later with reference to FIG. 11.

For example, the arithmetic device 11 operates in accordance with a system input reception program deployed on the volatile memory 13 to function as the system information reception unit 20 and operates in accordance with a constraint condition identification program deployed on the volatile memory 13 to function as the constraint condition identification unit 24. The same relation between the function unit and the program applies to the other function units included in the security measure determination apparatus 1.

FIG. 3 is a diagram illustrating an example of the data configuration of the system information 30. The system information 30 can be stored in the non-volatile memory 12 and/or the volatile memory 13. An example of the system information 30 includes a service column 31 and a related components column 32.

The service field 31 holds information indicating a service provided by the system to be secured. Examples of the service include control, monitoring, and maintenance. The related components column 32 holds information indicating the components included in the OT system and related to the service. In the related components column 32, "to" means that a component is related to another in the service.

The relation between "control" and "PLC to EWS" in the example of the system information 30 in FIG. 3 indicates that the components related to the service "control" include a programmable logic controller (PLC) and an engineering work station (EWS) among the components included in the OT system.

FIG. 4 is a diagram illustrating an example of the data configuration of the component information 40. The component information 40 can be stored in the non-volatile memory 12 and/or the volatile memory 13. An example of the system information 40 includes a component column 41 and an elements column 42.

The component column 41 indicates a component included in the OT system. The component is a device or an apparatus (e.g., an OT product) included in the OT system, such as a PLC, an EWS, a supervisory control and data acquisition (SCADA), a human machine interface (HMI), and an IoT gateway (IoTGW).

The elements column 42 indicates information about the elements constituting the component (e.g., the elements included in the component and the specifications, the kind, and the capability of each element). Specifically, the elements column 42 indicates the kinds of the OS and the chip of the CPU mounted on the PLC or IoTGW, for example. Examples of the kind of an OS include versatile OS and real-time operating system (RTOS). The component information 40 can further include other information such as the hardware interface, the product ID, and the media access control (MAC) address.

FIG. 5 is a diagram illustrating an example of the data configuration of the constraint condition information 60. The constraint condition information 60 can be stored in the non-volatile memory 12 and/or the volatile memory 13. The constraint condition information 60 can be determined based on information automatically extracted from the system information 30 and the component information 40 and/or information directly input by the user.

An example of the constraint condition information 60 includes a subsystem constraint table 61 indicating constraints assigned to the subsystems included in the system and a component constraint table 62 indicating constraints assigned to the components constituting the system.

The subsystem constraint table 61 holds constraints assigned to each subsystem in association with the combination of the service provided by the subsystem and the configuration of the subsystem. Examples of the constraints assigned to a subsystem include the output rate of the subsystem (an example of the operating state of the subsystem) and the control cycle of the subsystem (another example of the operating state of the subsystem).

In the example of FIG. 5, the constraints to subsystems are different depending on their configurations, even if the subsystems provide the same control service. Taking the subsystems providing control service as an example, the one including two PLCs can be assigned a higher value for the constraint on the output rate because it has higher processing capability than the one including one PLC. Meanwhile, each subsystem does not need to be assigned constraints on all items as noted from the subsystems for monitoring service and maintenance services in the example of FIG. 5. They are not assigned constraints on the output rate because they do not produce anything.

In the example of FIG. 5, the constraints to the subsystems are defined individually for a combination of a service to be provided by a subsystem and the configuration of the subsystem. However, the constraints can be defined for each service to be provided by a subsystem (without considering the configuration of the subsystem) or each configuration of a subsystem (without considering the service to be provided by the subsystem).

The component constraint table 62 indicates constraint conditions assigned to each component included in the system. In the example of FIG. 5, the specific constraints to a component include constraints on the specifications of the component, such as the kind and version of the OS, the kind and capability of the chip in the CPU, and the kind and capacity of the memory, and constraints on the operating state of the system and/or the component, such as the control cycle of the component. Each component does not need to be assigned constraints on all items.

### <Component Role Identification Processing>

FIG. 6 is a flowchart of an example of the processing of the component role identification unit 22 to identify the roles of the components.

At Step S60, the component role identification unit 22 automatically extracts control data and communication data from the data flow 50 of the system. The control data includes input/output data of the controllers (e.g., PLCs) included in the system and the communication data includes data transmitted between components included in the system. These data are included in the data flow 50. The control data and/or the communication data can include other information such as information indicating the control cycle or the communication cycle of the system.

At Step S61, the component role identification unit 22 identifies the role in the system of each component, based on the data sizes, the frequencies of data communication, and the kinds of the communication protocol of the control data and/or the communication data acquired at Step S60. The role in the system of a component can be information indicating the service itself such as control, maintenance, or monitoring (in other words, the service is an example of the role) or information on the detailed service (information on specifics of the service) such as robot control, alarm light control, and integrated monitoring.

For example, if communication between Component A and Component B satisfies the conditions that the communication protocol is specific to the control system (a predetermined communication protocol), that the frequency of the communication is extremely high (e.g., the frequency of the communication is higher than a predetermined threshold value), that the communication data size is small (e.g., the data size is smaller than a predetermined threshold value), and that data write and data read occur between Components A and B, it can be determined that either Component A or B has a role of a controller. Furthermore, if the communication data describes an identifier of a robot (assuming that the security measure determination apparatus 1 has information about identifiers of robots), it can be determined that Component A or B has a role of a robot controller.

If communication between Component A and Component C satisfies the conditions that the communication protocol is a versatile protocol (a predetermined communication protocol), that the frequency of the communication is not very high (e.g., the frequency of the communication is lower than a predetermined threshold value), that the communication data size is large (e.g., the data size is larger than a predetermined threshold value), and that either component unilaterally reads data of the other component, it can be determined that either Component A or C has a role of a monitor. Furthermore, if the communication data describes a predetermined number or more of identifiers of components (assuming that the security measure determination apparatus 1 has information about identifiers of the components), it can be determined that Component A or C has a role of an integrated monitor.

In view of the communication between Components A and B and the communication between Components A and C under the foregoing conditions, it can be supposed that Component A has roles of a controller and a monitor. Accordingly, Component A is supposed to be a SCADA. Further, Component B is supposed to be a controller to perform control and Component C to be a SCADA server or an IT terminal different from a SCADA.

In this way, the component role identification unit 22 can identify the role of each component based on the data size, the frequency of data communication, and the kind of the communication protocol of control data and/or communication data. The role can be identified in accordance with condition branches on the data size, the frequency of data communication, and the kind of the communication protocol of control data and/or communication data. The condition branches are predefined.

At Step S62, the component role identification unit 22 identifies the subsystems included in the system (a subsystem is an example of a control range (zone) of the system) based on the roles identified at Step S61 and determines the severities of impact of individual components onto the system.

For example, if the role of a component "PLC" is identified as controller at Step S61, the component role identification unit 22 searches the system information 30 for a record including a value "control" in the service column 31 and a value "PLC" in the related components column 32 and identifies the component related to the "PLC" in the related components column 32 of the record (in the example of FIG. 3, "EWS"). The component role identification unit 22 determines that the "PLC" and "EWS" belong to the same subsystem. In this way, the component role identification unit 22 can identify one or more subsystems.

For example, a SCADA having a role of an integrated monitor in the system manages control data collectively. Accordingly, the impact of the SCADA onto the system is high. The component role identification unit 22 calculates the severity of impact onto the system by a versatile quantitative calculation method for a risk of a cyberattack, Impact = Risk/Likelihood, where Impact is the severity of impact onto the system when the component is attacked, Risk is an indicator representing the risk when the component is attacked, and Likelihood is the probability of occurrence of an attack to the component. The Risk and Likelihood can be obtained by a method such as the Common Vulnerability Scoring System.

At Step S63, the component role identification unit 22 sends role information indicating the roles identified at Step S61 and the severities of impact determined at Step S62 to the measure determination unit 23 and the constraint condition identification unit 24 and sends information indicating the components constituting individual subsystems identified at Step S62 to the constraint condition identification unit 24.

FIG. 7 is a diagram illustrating an example of the data configuration of the security regulation database 2. An example of the security regulation database 2 includes a regulation name column 70, a category column 71, an ID column 72, and a requirement column 73.

The regulation name column 70 holds information indicating the name of a security regulation. The security regulation in the embodiments can include any rules about cyber security of OT systems and/or OT products (examples of components), such as a domestic law, an international law, a domestic regulation, an international regulation, an industrial regulation, a company regulation, a domestic standard, an international standard, an industrial standard, and a company standard related to cyber security. In other words, the security regulation database is an example of rule information.

The category column 71 holds information on a macro category in the security regulation. The **ID** column 72 holds an **ID** for identifying a requirement in the category. The requirement column 73 holds information indicating a requirement in the category.

International standards for control system security including the European Cyber Resilience Act and the International Electrotechnical Commission (IEC) standard 62443 are examples of the security regulations. In the IEC standard 62443-4-2, the security requirements for the components are categorized into seven categories.

The category "System Integrity" shown in FIG. 7 is one of the seven categories and is about the integrity of the system. The "ID: 1" in the "System Integrity" requires "Communication integrity", meaning that the component is required to have a function to verify the integrity of information.

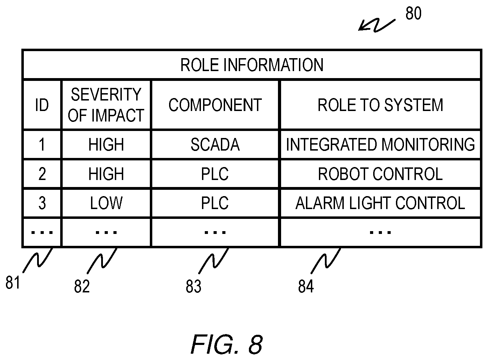

FIG. 8 is a diagram illustrating an example of the data configuration of the role information to be sent to the measure determination unit 23 at Step S63. An example of the role information 80 includes an **ID** column 81, a severity-of-impact column 82, a component column 83, and a role column 84. The **ID** column 81 holds an **ID** that identifies the record of the role information 80. The severity-of-impact column 82 holds information indicating the severity of impact determined at Step S62. Although the aforementioned method provides a numerical value for Impact, the numerical value of the impact is compared with a predetermined threshold value and classified as "high" or "low". The component filed 83 holds information indicating a component that has the severity of impact shown in the severity-of-impact column 82 and the role shown in the role column 84. The role column 84 holds information indicating the role identified at Step S61.

FIG. 9 is a diagram illustrating an example of the configuration of the possible measure database 3. An example of the possible measure database 3 includes a category column 301, a severity-of-impact column 302, a component column 3, a role column 304, a specific measure (subsystem) column 305, a specific measure (component) column 306, a subsystem constraints column 307, and a component constraints column 308.

The category column 301 holds information indicating a macro category in the security regulations. The severity-of-impact column 302 holds information indicating the severity of impact of the component indicated in the component column 303. The component column 303 holds information indicating a component included in the subsystem to be secured. The role column 304 holds information indicating the role of the component.

The specific measure (subsystem) column 305 holds information indicating a specific security measure to be implemented to the subsystem (as a whole subsystem). The specific measure (component) column 306 holds information indicating a specific security measure to be implemented to the component indicated in the component column 303.

The subsystem constraints column 307 holds information indicating constraints required for the subsystem to implement the specific measure indicated in the specific measure (subsystem) column 305. The component constraints column 308 holds information indicating constraints required for the component indicated in the component column 303 to implement the specific measure indicated in the specific measure (component) column 306.

According to the uppermost record in the example of FIG. 9, the security measures for the system to achieve the category "Availability" (satisfy the requirements for the "Availability) include a specific measure for a subsystem of "Entering fallback" and a specific measure for a component "PLC" included in the subsystem of "Having exceptional handling". Furthermore, the same record indicates that the severity of impact of this "PLC" needs to be "High", its role needs to be "Robot Control", the subsystem needs to have "Operating Rate: 90% or more" to implement the specific measure "Entering fallback", and the PLC needs to have "Kind of OS: AX-X, Kind of CPU: By, Memory: cx" to implement the specific measure "Having exceptional handling".

In the example of FIG. 9, the security measures provided in one record of the possible measure database 3 are defined by a combination of a specific measure for a subsystem and a specific measure for a component (this means that the security requirements for this category will be satisfied by implementing both of the specific measures in this combination). However, the security measures can only consist of a specific measure for a subsystem (in other words, the database 3 can include a record that does not describe the severity of impact, the component, the role, the component specific measure, and the component constraints) or a specific measure for a component (in other words, the database 3 can include a record that does not describe the subsystem specific measure and the subsystem constraints).

Furthermore, the possible measure database 3 can include a record defining a specific measure and constraints for a component but not defining the severity of impact and/or the role of the component. This means that there can be a specific measure for a component that can be implemented no matter what the severity of impact and/or the role are.

Still further, one record can describe specific measures for a plurality of components, although the example of a record in FIG. 9 describes a specific measure for one component. In this case, the record describes the severity of impact, role, and constraints for each of the plurality of components.

### <Measure Determination Processing>

FIG. 10 is a flowchart of an example of measure determination processing. The measure determination unit 23 presents a possible measure based on the roles and severities of impact identified by the component role identification unit 22, the constraint conditions determined by the constraint condition identification unit 24 to be satisfied by each subsystem and component, the security regulation database 2, and the possible measure database 3.

At Step S80, the measure determination unit 23 receives a security requirement in accordance with input from the user through the input device 4 and identifies the regulation name relevant to the requirement with reference to the security regulation database 2. The following description is based on an assumption that the security requirement desired by the user at Step S80 is "Maintaining the availability of the system".

At Step S81, the measure determination unit 23 extracts possible measures to address the security requirement input at Step S80 from the possible measure database 3. Specifically, the measure determination unit 23 identifies the category corresponding to the input requirement with reference to the security regulation database 2 and acquires possible measures (or records of the possible measure database 3) for the identified category from the possible measure database 3. At Step S80, the user can directly input the regulation name or the category.

Assuming that the category corresponding to the user's requirement "Maintaining the availability of the system" is "Availability", the measure determination unit 23 acquires the uppermost record from the example of the possible measure database 3 in FIG. 9. A representative attack to violate the "Availability" of the system is a denial-of-service (DoS) attack; "fallback" can be a measure to secure a subsystem against DoS attacks. The fallback is an operating method that ensures the minimum control capability when a trouble occurs in a subsystem.

For simplicity of explanation, the following description is provided assuming that only one subsystem is identified at Step S62, although the following Steps S82 to S86 are to be performed on each subsystem identified at Step S62.

At Step S82, the constraint condition identification unit 24 determines whether the possible measures extracted at Step S81 include any possible measure such that the subsystem constraints described therein meet the constraints assigned to the subsystem (the subsystem constraints identified with reference to the subsystem constraint table 61).

Specifically, the constraint condition identification unit 24 accesses the subsystem constraint table 61 and acquires the subsystem constraints associated with the combination of the role (service) and the configuration of the subsystem indicated in the information output at Step S63. The constraint condition identification unit 24 determines whether the possible measures extracted at Step S81 include any possible measure such that the subsystem constraints in the subsystem constraints column 307 meet the acquired subsystem constraints. It is advisable that a possible measure that does not describe any subsystem constraint in the subsystem constraints column 307 (or a possible measure that only describes component constraints) among the possible measures extracted at Step S81 be determined to satisfy the constraints at Step S82, no matter what subsystem constraints are acquired from the subsystem constraint table 61.

Taking the example of the possible measure in the uppermost record of the possible measure database 3 in FIG. 9, the subsystem constraint is "Operating rate: 90% or more" and accordingly, the constraint condition identification unit 24 determines whether the constraints assigned to the subsystem included in the system (that is, the subsystem constraints acquired from the subsystem constraint table 61) satisfy "Operating rate: 90% or more" at Step S82.

If the constraint condition identification unit 24 determines that there is no possible measure that satisfies the constraints assigned to the subsystem, the measure determination unit 23 determines that no measure can be taken for the subsystem and terminates the measure determination processing at Step S86.

At this Step S86, the measure determination unit 23 can output information on the subsystem and information indicating that there is no available security measure on the display device 5. If the constraint condition identification unit 24 finds a possible measure satisfying the constraints assigned to the subsystem, the constraint condition identification unit 24 proceeds to Step S83.

At Step S83, the constraint condition identification unit 24 determines whether the possible measures determined at Step S82 to satisfy the constraints assigned to the subsystem include any possible measure such that the component constraints described therein meet the constraints assigned to the component (the component constraints identified with reference to the component constraint table 62).

Specifically, the constraint condition identification unit 24 accesses the component constraint table 62 and acquires the component constraints for each component included in the subsystem indicated in the information output at Step S63. The constraint condition identification unit 24 further accesses the role information 80 and identifies the role and the severity of impact of the component. The constraint condition identification unit 24 determines whether the possible measures determined at Step S82 to satisfy the constraints assigned to the subsystem include any possible measure such that the combination of the component in the component column 303, the role in the role column 304, and the severity of impact in the severity-of-impact column 302 matches the combination of the component, the identified role, and the identified severity of impact and further, the component constraints in the component constraints column 308 satisfy the acquired component constraints.

It is advisable that a possible measure that does not describe any component constraint in the component constraints column 308 (or a possible measure that only describes subsystem constraints) among the possible measures determined at Step S82 to satisfy the constraints assigned to the subsystem be determined to satisfy the constraints no matter what component constraints are acquired from the component constraint table 62 at Step S83. In addition, regarding a possible measure that does not describe a severity of impact in the severity-of-impact column 302 and/or a role in the role column 304 among the possible measures determined at Step S82 to satisfy the constraints assigned to the subsystem, the role and the severity of impact of the component can be ignored at Step S83.

Taking the example of the possible measure in the uppermost record of the possible measure database 3 in FIG. 9, the component constraints for the component "PLC" are "Kind of OS: AX-X, Kind of CPU: By, Memory: cx" and accordingly, the constraint condition identification unit 24 determines whether the subsystem included in the system includes a "PLC", the constraints assigned to a "PLC" (or the component constraints acquired from the component constraint table 62) satisfy the conditions "Kind of OS: AX-X, Kind of CPU: By, Memory: cx" at Step S83. In the case where a "PLC" is used as a component, whether exceptional handling at occurrence of a trouble is available for the "PLC" is a key to secure the availability.

If the constraint condition identification unit 24 determines that there is no possible measure satisfying the constraints assigned to any of the components, the constraint condition identification unit 24 proceeds to Step S86. Examples of the case where there is no possible measure satisfying the constraints assigned to a component include a case where exceptional handling cannot be implemented in view of the memory capacity of the component and a case where the component has only a single CPU so that a backup system is not available.

If the constraint condition identification unit 24 determines that there is a possible measure satisfying the constraints assigned to a component (or determines that there is a possible measure satisfying both the constraints for the subsystem and a component), the constraint condition identification unit 24 proceeds to Step S84.

At Step S84, the measure determination unit 23 selects some possible measures from the possible measures satisfying the constraints for both of the subsystem and a component, based on the roles and the severities of impact of individual components. Specifically, the measure determination unit 23 determines a priority ranking of the possible measures satisfying the constraints for both of the subsystem and a component based on the roles and the severities of impact and selects a predetermined number of possible measures in accordance with the priority ranking. For example, the policies to determine the priority ranking are predetermined based on the combination of the role and the severity of impact; according to the policies, if the roles are the same, the component having a higher severity of impact is prioritized and if the severities of impact are the same, the priority levels are different depending on the role.

Taking the possible measure according to the uppermost record in FIG. 9 as an example, the "PLC" has a high severity of impact and an important role of "(robot) control" in the system. Therefore, if the PLC receives a DoS attack, the entire system will be affected. Accordingly, implementation of a security function for a "PLC", such as exceptional handling (that allows entering fallback), minimizes the effect of the attack onto the system.

At Step S85, the measure determination unit 23 sends information on the regulation (the requirement input and the regulation name identified at Step S80), information about the selected possible measures (the specific measures according to the possible measures selected at Step S84, the subsystem and/or the component to implement the specific measures, and the configuration of the subsystem) to the implementation location output unit 25 and terminates the measure determination processing.

FIG. 11 is a diagram illustrating an example of the layout of an implementation location indication screen. The implementation location indication screen 90 is a screen to be displayed on the display device 5 by the implementation location output unit 25 based on the information received at Step S85. Specifically, the implementation location output unit 25 outputs the security measures (specific measures) determined by the measure determination unit 23 to the display device 5 together with the name of the applied regulation to inform the user about them. The manner to inform the user is not limited to this example; the implementation location output unit 25 can inform the user of the security measures provided by the measure determination unit 23 using a generative artificial intelligence (AI).

An example of the implementation location indication screen 90 includes a regulation selection area 91, a regulation changing button 92, a system display area 93, a subsystem service display area 94, and a measure list display area 95.

The regulation selection area 91 is an area for selecting the regulation to be addressed by the system. The European Cyber Resilience Act and the IEC standard 62443 are examples of the regulation. When the user selects a regulation in the regulation selection area 91 and a service of a control system in the subsystem service display area 94, the display in the system display area 93 and the measure list display area 95 is changed to the display in accordance with the regulation and the subsystem.

The regulation changing button 92 is used to change the security regulation to be applied. For example, it is used to change the regulation from the European Cyber Resilience Act to the IEC standard 62443.

In the system display area 93, the subsystem selected in the subsystem service display area 94 is indicated as a zone (in FIG. 11, the hatched zone surrounded by a dashed line) together with the kinds of the components therein. Hence, the user can visually understand where to implement security measures in the system.

The measure list display area 95 displays the requirement input at Step S80 and the specific measures provided in the possible measure determined for the subsystem selected in the subsystem service display area 94 and a component included in the subsystem (the specific measures to be taken by the system to satisfy the requirement). In the example of the measure list display area 95 in FIG. 11, making redundancy of the subsystem for the subsystem and enabling switching to fallback for the PLC are listed as the security measures available for the subsystem and a component therein to satisfy the requirement "Maintaining availability".

As described above, the security measure determination apparatus 1 in this embodiment can determine possible measures to address a requirement of a security regulation based on the security regulation database 2 and the possible measure database 3. The determined possible measures can be implemented to the system because they satisfy the constraint conditions of the subsystems and components. Furthermore, the security measure determination apparatus 1 can present a security measure important for the system preferentially because it selects possible measures in view of the roles and the severities of impact of the components in the system. Since the security measure determination apparatus 1 can speedily determine possible measures as described above, reduction in man-hour is available to select a security measure that is in conformance with the security regulations, available for implementation, and important.

Especially for components like OT products that are specialized to be incorporated, strict constraint conditions are provided to the resources of the elements included in the component (e.g., the specifications of the elements are low, compared to those of the devices to be included in an IT system). The security measure determination apparatus 1 in this embodiment can narrow down the candidates for the security measures that can be implemented onto an OT product through analysis of the combinations of constraint conditions specific to the OT product and as a result, the security measure determination apparatus 1 can present highly appropriate security measures in designing and/or managing a security system for an OT product.

### EMBODIMENT 2

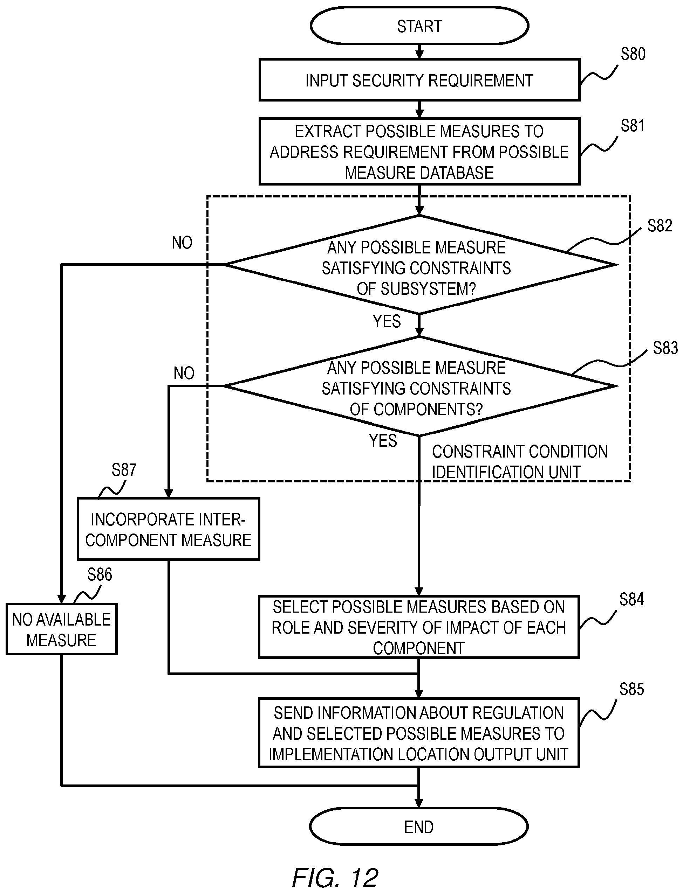

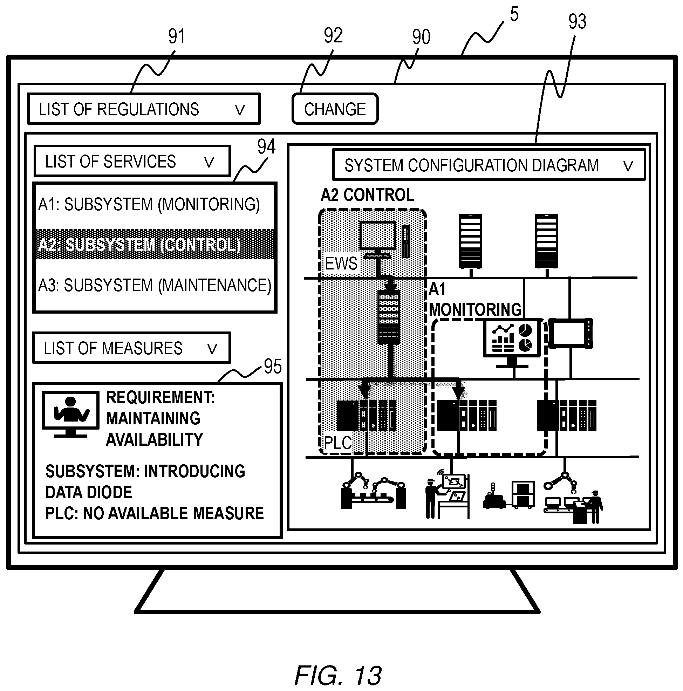

Determination of security measures and an apparatus therefor in Embodiment 2 are described with reference to FIGS. 12 and 13. The same or equivalent configurations to those described in Embodiment 1 are assigned the same reference signs and the differences from Embodiment 1 are mainly described. Illustration of an example of the functional configuration of the security measure determination apparatus 1 in this embodiment is omitted because it is the same as the one in FIG. 2; however, the internal processing of the measure determination unit 23 and the implementation location output unit 25 is different from those in Embodiment 1.

FIG. 12 is a flowchart of an example of measure determination processing. The measure determination processing in this embodiment is different from the measure determination processing in Embodiment 1 (FIG. 10) in the point of including the processing of Step S87. Steps S82 to S87 are executed on each subsystem identified at Step S62.

When the constraint condition identification unit 24 determines that there exist some possible measures satisfying the constraints assigned to the subsystem but none of them satisfy the constraints assigned to the components, the measure determination unit 23 proceeds to Step S87.

At Step S87, the measure determination unit 23 applies a specific measure for a path between components included in the subsystem. Specifically, the measure determination unit 23 selects a possible measure including components related to each other (components related with "to" in the system information 30) in the component column 303 from the possible measure satisfying the constraints for the subsystem, and applies a measure to the path between the components. Measures to be applied to a path between components can be predetermined depending on the requirement or the combination of the requirement and the kinds of the components.

Taking an example where the regulation requires "Availability", no specific security measure to withstand DoS attacks is available because of the constraints for the components. However, as far as the constraints for the subsystem are satisfied, implementation of a security measure to a path between components can overcome the constraints. For example, introducing a data diode between a PLC and an EWS enables unidirectional data control, so that the component can be protected. Like this example, there is a case such that a requirement of a regulation is satisfied as a result of cooperation with the subsystem, even though a specific security measure cannot be implemented to a component.

After Step S87, the measure determination unit 23 proceeds to Step S85. At Step S85 to be executed after Step S87, the measure determination unit 23 sends information about the selected possible measure, such as information indicating the inter-component measure determined at Step S87, the subsystem to implement the measure, and the configuration of the subsystem.

The measure determination processing in this embodiment can provide a possible measure satisfying the requirements of a regulation even in the case where a possible measure satisfying constraints for both of the subsystem and the component does not exist but a possible measure only satisfying constraints for the subsystem exists.

FIG. 13 is a diagram illustrating an example of the layout of an implementation location indication screen. In the example of the implementation location indication screen 90 in FIG. 13, information indicating an inter-component measure is displayed in the measure list display area 95 as a specific measure to be implemented to the subsystem. The measure list display area 95 may further display information indicating the location to implement the measure, between which component and which component. In the example of FIG. 13, there is no specific measure available for the components to address the requirement "Availability" but a measure available for the subsystem (available for a path between components) is provided. The example of FIG. 13 indicates that the requirement "Availability" of the regulation can be satisfied by introducing a data diode into the subsystem, even though a security measure cannot be implemented to the PLC itself.

This invention is not limited to the above-described embodiments but includes various modifications. The above-described embodiments are explained in details for better understanding of this invention and are not limited to those including all the configurations described above. A part of the configuration of one embodiment may be replaced with that of another embodiment; the configuration of one embodiment may be incorporated to the configuration of another embodiment. A part of the configuration of each embodiment may be added, deleted, or replaced by that of a different configuration.

The above-described configurations, functions, and processors, for all or a part of them, may be implemented by hardware: for example, by designing an integrated circuit. The above-described configurations and functions may be implemented by software, which means that a processor interprets and executes programs providing the functions. The information of programs, tables, and files to implement the functions may be stored in a storage device such as a memory, a hard disk drive, or an SSD (Solid State Drive), or a storage medium such as an IC card, or an SD card.

The drawings show control lines and information lines as considered necessary for explanations but do not show all control lines or information lines in the products. It can be considered that almost of all components are actually interconnected.

## Claims

1. A security measure determination apparatus (1) comprising:
a processor (11); and
a memory (12, 13), wherein
the memory (12, 13) holds:
rule information (2) indicating requirements according to security rules to be satisfied by a system to be secured;
constraint condition information (60) indicating first constraints on operating states assigned to subsystems included in the system and second constraints on specifications assigned to components included in the system; and
possible measure information (3) indicating combinations to satisfy the requirements, each combination including a subsystem specific measure of a measure for a subsystem and a component specific measure of a measure for a subsystem, third constraints to be satisfied by the subsystem to implement the subsystem specific measure, and fourth constraints to be satisfied by the component to implement the component specific measure, and wherein
the processor (11) is configured to:
receive designation of a first requirement;
extract combinations to address the first requirement from the possible measure information (3);
determine subsystem specific measures for a subsystem included in the system and component specific measures for components included in the subsystem from the extracted combinations, based on results of comparison of first constraints and third constraints for the subsystem and results of comparison of second constraints and fourth constraints for each of the components included in the subsystem; and
generate data to display information indicating the determined subsystem specific measures and component specific measures, wherein
the security measure determination apparatus (1) further comprising:
the memory (12, 13) holds role information (80) indicating roles in the system of the components included in the system and severities of impact onto the system of the components, wherein
the processor (11) is configured to:
select a subsystem specific measure and a component specific measure from the determined subsystem specific measures and component specific measures based on a priority rank of each component to implement a component specific measure,
the priority rank being determined in accordance with predefined policies about the roles and the severities of impact and
generate data to display information indicating the selected subsystem specific measure and component specific measure, and wherein
the priority rank is determined depending on the combination of a role and a severity of impact and the predetermined policies are defined to assign a higher priority to a higher severity of impact, wherein
the possible measure information (3) holds information indicating a role and a severity of impact of each component to implement a component specific measure, and wherein
the processor (11) is configured to determine subsystem specific measures for a subsystem included in the system and component specific measures for components included in the subsystem from the extracted combinations, based on results of comparison of first constraints and third constraints for the subsystem, results of comparison of second constraints and fourth constraints for each of the components included in the subsystem, and results of comparison of a role and a severity of impact of each of the components indicated in the role information (80) and roles and severities of impact of each of the components indicated in the possible measure information (3).

2. The security measure determination apparatus (1) according to claim 1, wherein
the memory (12, 13) holds a data flow (50) indicating control data and/or communication data for the components included in the system, and wherein
the processor (11) is configured to:
identify at least one of data size, frequency of communication, and communication protocol of the control data and/or the communication data; and
identify the roles in the system of the components included in the system based on the at least one and predetermined conditions on the at least one and store information on the identified roles to the role information (80).

3. The security measure determination apparatus (1) according to claim 1, wherein
the processor (11) is configured to generate data to display information indicating the subsystem and the components to implement the determined subsystem specific measures and component specific measures.

4. The security measure determination apparatus (1) according to claim 1, wherein
each component has an OS, a CPU, and a memory (12, 13), wherein
each of the first constraints and the third constraints includes at least either a constraint on the output rate of a subsystem or a constraint on the control cycle of a subsystem, and wherein
each of the second constraints and the fourth constraints includes at least one of a constraint on the kind of the OS of a component, a constraint on a capability of the CPU of a component, a constraint on the capacity of the memory (12, 13) of a component, and a constraint on the control cycle of a component.

5. The security measure determination apparatus (1) according to claim 1, wherein
the memory (12, 13) holds system information (30) indicating components related to each other in the system, wherein,
in a case of determining that there exists a combination of a subsystem specific measure applicable to a subsystem included in the system and a component specific measure not applicable to a component included in the subsystem in the extracted combinations as a result of determination based on the results of comparison of the first constraints and the third constraints and the results of comparison of the second constraints and the fourth constraints,
the processor (11) is configured to:
determine an inter-component measure to be implemented to a path between the component and a component related thereto in the system information (30) to address the first requirement; and
generate data to display information indicating the determined inter-component measure, and wherein
inter-component measures are predetermined for individual requirements.

6. A security measure determination method by a security measure determination apparatus (1), wherein
the security measure determination apparatus (1) includes a processor (11) and a memory (12, 13), wherein
the memory (12, 13) holds:
rule information (2) indicating requirements according to security rules to be satisfied by a system to be secured;
constraint condition information (60) indicating first constraints on operating states assigned to subsystems included in the system and second constraints on specifications assigned to components included in the system; and
possible measure information (3) indicating combinations to satisfy the requirements, each combination including a subsystem specific measure of a measure for a subsystem and a component specific measure of a measure for a subsystem, third constraints to be satisfied by the subsystem to implement the subsystem specific measure, and fourth constraints to be satisfied by the component to implement the component specific measure, and
role information (80) indicating roles in the system of the components included in the system and severities of impact onto the system of the components, wherein
the possible measure information (3) holds information indicating a role and a severity of impact of each component to implement a component specific measure,
the security measure determination method comprising:
receiving, by the processor (11), designation of a first requirement;
extracting, by the processor (11), combinations to address the first requirement from the possible measure information (3);
determining, by the processor (11), subsystem specific measures for a subsystem included in the system and component specific measures for components included in the subsystem from the extracted combinations, based on results of comparison of first constraints and third constraints for the subsystem, results of comparison of second constraints and fourth constraints for each of the components included in the subsystem, and results of comparison of a role and a severity of impact of each of the components indicated in the role information (80) and roles and severities of impact of each of the components indicated in the possible measure information (3);
selecting, by the processor (11), a subsystem specific measure and a component specific measure from the determined subsystem specific measures and component specific measures based on a priority rank of each component to implement a component specific measure, the priority rank being determined in accordance with predefined policies about the roles and the severities of impact, wherein the priority rank is determined depending on the combination of a role and a severity of impact and the predetermined policies are defined to assign a higher priority to a higher severity of impact; and
generating, by the processor (11), data to display information indicating the determined subsystem specific measures and component specific measures.

## Patentansprüche

1. Sicherheitsmaßnahmen-Bestimmungsvorrichtung (1), die umfasst:
einen Prozessor (11); und
einen Speicher (12, 13), wobei
der Speicher (12, 13) hält:
Regelinformationen (2), die Anforderungen in Übereinstimmung mit Sicherheitsregeln, die durch ein zu sicherndes System zu erfüllen sind, angeben;
Beschränkungsbedingungsinformationen (60), die erste Beschränkungen an Betriebszustände, die in dem System enthaltenen Teilsystemen zugewiesen sind, und zweite Beschränkungen an Spezifikationen, die in dem System enthaltenen Komponenten zugewiesen sind, angeben; und
Informationen (3) über mögliche Maßnahmen, die Kombinationen zum Erfüllen der Anforderungen angeben, wobei jede Kombination eine teilsystemspezifische Maßnahme einer Maßnahme für ein Teilsystem und eine komponentenspezifische Maßnahme einer Maßnahme für ein Teilsystem, dritte Beschränkungen, die durch das Teilsystem zu erfüllen sind, um die teilsystemspezifische Maßnahme zu implementieren, und vierte Beschränkungen, die durch die Komponente zu erfüllen sind, um die komponentenspezifische Maßnahme zu implementieren, enthält, und wobei
der Prozessor (11) konfiguriert ist zum:
Empfangen einer Festlegung einer ersten Anforderung;
Extrahieren von Kombinationen zum Behandeln der ersten Anforderung aus den Informationen (3) über mögliche Maßnahmen;
Bestimmen teilsystemspezifischer Maßnahmen für ein in dem System enthaltenes Teilsystem und komponentenspezifischer Maßnahmen für in dem Teilsystem enthaltene Komponenten aus den extrahierten Kombinationen auf der Grundlage von Ergebnissen des Vergleichs erster Beschränkungen und dritter Beschränkungen für das Teilsystem und von Ergebnissen des Vergleichs zweiter Beschränkungen und vierter Beschränkungen für jede der in dem Teilsystem enthaltenen Komponenten; und
Erzeugen von Daten zum Anzeigen von Informationen, die die bestimmten teilsystemspezifischen Maßnahmen und komponentenspezifischen Maßnahmen angeben, wobei
die Sicherheitsmaßnahmen-Bestimmungsvorrichtung (1) ferner umfasst:
dass der Speicher (12, 13) Regelinformationen (80) hält, die Regeln in dem System der in dem System enthaltenen Komponenten und Schweren der Auswirkung auf das System der Komponenten angeben, wobei
der Prozessor (11) konfiguriert ist zum:
Auswählen einer teilsystemspezifischen Maßnahme und einer komponentenspezifischen Maßnahme aus den bestimmten teilsystemspezifischen Maßnahmen und komponentenspezifischen Maßnahmen auf der Grundlage eines Prioritätsrangs jeder Komponente zum Implementieren einer komponentenspezifischen Maßnahme,
wobei der Prioritätsrang in Übereinstimmung mit vordefinierten Richtlinien über die Regeln und die Schweren der Auswirkung bestimmt wird, und
Erzeugen von Daten zum Anzeigen von Informationen, die die ausgewählte teilsystemspezifische Maßnahme und komponentenspezifische Maßnahme angeben, und wobei
der Prioritätsrang in Abhängigkeit von der Kombination einer Regel und einer Schwere der Auswirkung bestimmt wird und wobei die vorgegebenen Richtlinien definiert werden, um einer höheren Schwere der Auswirkung eine höhere Priorität zuzuweisen, wobei
die Informationen (3) über mögliche Maßnahmen Informationen halten, die eine Regel und eine Schwere der Auswirkung jeder Komponente zum Implementieren einer komponentenspezifischen Maßnahme angeben, und wobei
der Prozessor (11) konfiguriert ist, aus den extrahierten Kombinationen auf der Grundlage von Ergebnissen des Vergleichs erster Beschränkungen und dritter Beschränkungen für das Teilsystem, von Ergebnissen des Vergleichs zweiter Beschränkungen und vierter Beschränkungen für jede der in dem Teilsystem enthaltenen Komponenten und von Ergebnissen des Vergleichs einer Regel und einer Schwere der Auswirkung jeder der in den Regelinformationen (80) angegebenen Komponenten und Regeln und Schweren der Auswirkungen jeder der in den Informationen (3) über mögliche Maßnahmen angegebenen Komponenten teilsystemspezifische Maßnahmen für ein in dem System enthaltenes Teilsystem und komponentenspezifische Maßnahmen für in dem Teilsystem enthaltene Komponenten zu bestimmen.

2. Sicherheitsmaßnahmen-Bestimmungsvorrichtung (1) nach Anspruch 1, wobei
der Speicher (12, 13) einen Datenfluss (50) hält, der Steuerdaten und/oder Kommunikationsdaten für die in dem System enthaltenen Komponenten angibt, und wobei
der Prozessor (11) konfiguriert ist zum:
Identifizieren wenigstens eines der Datengröße, der Häufigkeit der Kommunikation und des Kommunikationsprotokolls der Steuerdaten und/oder der Kommunikationsdaten; und
Identifizieren der Regeln in dem System der in dem System enthaltenen Komponenten auf der Grundlage des wenigstens einen und vorgegebener Bedingungen über das wenigstens eine und Speichern von Informationen über die identifizierten Regeln in den Regelinformationen (80).

3. Sicherheitsmaßnahmen-Bestimmungsvorrichtung (1) nach Anspruch 1, wobei
der Prozessor (11) konfiguriert ist, Daten zum Anzeigen von Informationen, die das Teilsystem und die Komponenten zum Implementieren der bestimmten teilsystemspezifischen Maßnahmen und komponentenspezifischen Maßnahmen angeben, zu erzeugen.

4. Sicherheitsmaßnahmen-Bestimmungsvorrichtung (1) nach Anspruch 1, wobei
jede Komponente ein OS, eine CPU und einen Speicher (12, 13) aufweist, wobei
jede der ersten Beschränkungen und der dritten Beschränkungen wenigstens entweder eine Beschränkung an die Ausgaberate eines Teilsystems oder eine Beschränkung an den Steuerzyklus eines Teilsystems enthält, und wobei
jede der zweiten Beschränkungen und der vierten Beschränkungen wenigstens eine einer Beschränkung an die Art des OS einer Komponente, einer Beschränkung an eine Fähigkeit der CPU einer Komponente, einer Beschränkung an die Kapazität des Speichers (12, 13) einer Komponente und einer Beschränkung an den Steuerzyklus einer Komponente enthält.

5. Sicherheitsmaßnahmen-Bestimmungsvorrichtung (1) nach Anspruch 1, wobei
der Speicher (12, 13) Systeminformationen (30), die Komponenten in Bezug zueinander in dem System angeben, hält, wobei
im Fall einer Bestimmung, dass es in den extrahierten Kombinationen als ein Ergebnis der Bestimmung auf der Grundlage der Ergebnisse des Vergleichs der ersten Beschränkungen und der dritten Beschränkungen und der Ergebnisse des Vergleichs der zweiten Beschränkungen und der vierten Beschränkungen eine Kombination einer teilsystemspezifischen Maßnahme, die auf ein in dem System enthaltenes Teilsystem anwendbar ist, und einer komponentenspezifischen Maßnahme, die auf eine in dem Teilsystem enthaltene Komponente nicht anwendbar ist, gibt,
der Prozessor (11) konfiguriert ist zum:
Bestimmen einer Maßnahme zwischen Komponenten, die auf einem Weg zwischen der Komponente und einer Komponente in Bezug zu ihr in den Systeminformationen (30) zu implementieren ist, um die erste Anforderung zu behandeln; und
Erzeugen von Daten zum Anzeigen von Informationen, die die bestimmte Maßnahme zwischen Komponenten angeben, und wobei
die Maßnahmen zwischen Komponenten für einzelne Anforderungen vorgegeben sind.

6. Sicherheitsmaßnahmen-Bestimmungsverfahren durch eine Sicherheitsmaßnahmen-Bestimmungsvorrichtung (1), wobei
die Sicherheitsmaßnahmen-Bestimmungsvorrichtung (1) einen Prozessor (11) und einen Speicher (12, 13) enthält, wobei
der Speicher (12, 13) hält:
Regelinformationen (2), die Anforderungen in Übereinstimmung mit Sicherheitsregeln, die durch ein zu sicherndes System zu erfüllen sind, angeben;
Beschränkungsbedingungsinformationen (60), die erste Beschränkungen an Betriebszustände, die in dem System enthaltenen Teilsystemen zugewiesen sind, und zweite Beschränkungen an Spezifikationen, die in dem System enthaltenen Komponenten zugewiesen sind, angeben; und
Informationen (3) über mögliche Maßnahmen, die Kombinationen zum Erfüllen der Anforderungen angeben, wobei jede Kombination eine teilsystemspezifische Maßnahme einer Maßnahme für ein Teilsystem und eine komponentenspezifische Maßnahme einer Maßnahme für ein Teilsystem, dritte Beschränkungen, die durch das Teilsystem zu erfüllen sind, um die teilsystemspezifische Maßnahme zu implementieren, und vierte Beschränkungen, die durch die Komponente zu erfüllen sind, um die komponentenspezifische Maßnahme zu implementieren, enthält, und
Regelinformationen (80), die Regeln in dem System der in dem System enthaltenen Komponenten und Schweren der Auswirkung auf das System der Komponenten angeben, wobei
die Informationen (3) über mögliche Maßnahmen Informationen halten, die eine Regel und eine Schwere der Auswirkung jeder Komponente zum Implementieren einer komponentenspezifischen Maßnahme angeben,
wobei das Sicherheitsmaßnahmen-Bestimmungsverfahren umfasst:
Empfangen einer Festlegung einer ersten Anforderung durch den Prozessor (11);
Extrahieren von Kombinationen zum Behandeln der ersten Anforderung aus den Informationen (3) über mögliche Maßnahmen durch den Prozessor (11);
Bestimmen teilsystemspezifischer Maßnahmen für ein in dem System enthaltenes Teilsystem und komponentenspezifischer Maßnahmen für in dem Teilsystem enthaltene Komponenten aus den extrahierten Kombinationen auf der Grundlage von Ergebnissen des Vergleichs erster Beschränkungen und dritter Beschränkungen für das Teilsystem, von Ergebnissen des Vergleichs zweiter Beschränkungen und vierter Beschränkungen für jede der in dem Teilsystem enthaltenen Komponenten und von Ergebnissen des Vergleichs einer Regel und einer Schwere der Auswirkung jeder der in den Regelinformationen (80) angegebenen Komponenten und Regeln und Schweren der Auswirkungen jeder der in den Informationen (3) über mögliche Maßnahmen angegebenen Komponenten durch den Prozessor (11);
Auswählen einer teilsystemspezifischen Maßnahme und einer komponentenspezifischen Maßnahme aus den bestimmten teilsystemspezifischen Maßnahmen und komponentenspezifischen Maßnahmen auf der Grundlage eines Prioritätsrangs jeder Komponente zum Implementieren einer komponentenspezifischen Maßnahme, wobei der Prioritätsrang in Übereinstimmung mit vordefinierten Richtlinien über die Regeln und die Schweren der Auswirkung bestimmt wird, wobei der Prioritätsrang in Abhängigkeit von der Kombination einer Regel und einer Schwere der Auswirkung bestimmt wird und wobei die vorgegebenen Richtlinien definiert werden, um einer höheren Schwere der Auswirkung eine höhere Priorität zuzuweisen, durch den Prozessor (11); und
Erzeugen von Daten zum Anzeigen von Informationen, die die bestimmten teilsystemspezifischen Maßnahmen und komponentenspezifischen Maßnahmen angeben, durch den Prozessor (11).

## Revendications

1. Appareil de détermination de mesure de sécurité (1) comprenant :
un processeur (11) ; et
une mémoire (12, 13), dans lequel
la mémoire (12, 13) contient :
des informations de règles (2) indiquant des exigences en accord avec des règles de sécurité à satisfaire par un système à sécuriser ;
des informations de conditions de contrainte (60) indiquant des premières contraintes concernant des états de fonctionnement associés à des soussystèmes inclus dans le système et des deuxièmes contraintes concernant des spécifications associées à des composants inclus dans le système ; et
des informations de mesure possible (3) indiquant des combinaisons pour satisfaire aux exigences, chaque combinaison incluant une mesure spécifique de sous-système d'une mesure pour un sous-système et une mesure spécifique de composant d'une mesure pour un sous-système, des troisièmes contraintes à satisfaire par le sous-système pour mettre en œuvre la mesure spécifique de sous-système, et des quatrièmes contraintes à satisfaire par le composant pour mettre en œuvre la mesure spécifique de composant, et dans lequel
le processeur (11) est configuré pour :
recevoir une désignation d'une première exigence ;
extraire des combinaisons pour adresser la première exigence à partir des informations de mesure possible (3) ;
déterminer des mesures spécifiques de sous-système pour un sous-système inclus dans le système et des mesures spécifiques de composant pour des composants inclus dans le sous-système à partir des combinaisons extraites, sur la base de résultats de comparaison de premières contraintes et de troisièmes contraintes pour le sous-système et de résultats de comparaison de deuxièmes contraintes et de quatrièmes contraintes pour chacun des composants inclus dans le sous-système ; et
générer des données pour afficher des informations indiquant les mesures spécifiques de sous-système et mesures spécifiques de composant déterminées, dans lequel
l'appareil de détermination de mesure de sécurité (1) comprenant en outre :
la mémoire (12, 13) contient des informations de rôle (80) indiquant des rôles dans le système des composants inclus dans le système et des gravités d'impact sur le système des composants, dans lequel
le processeur (11) est configuré pour :
sélectionner une mesure spécifique de sous-système et une mesure spécifique de composant à partir des mesures spécifiques de sous-système et mesures spécifiques de composant déterminées sur la base d'un rang de priorité de chaque composant pour mettre en œuvre une mesure spécifique de composant,
le rang de priorité étant déterminé en accord avec des politiques prédéfinies concernant les rôles et les gravités d'impact, et
générer des données pour afficher des informations indiquant la mesure spécifique de sous-système et mesure spécifique de composant sélectionnées, et dans lequel
le rang de priorité est déterminé en dépendance de la combinaison d'un rôle et d'une gravité d'impact et les politiques prédéterminées sont définies pour associer une priorité plus élevée à une gravité d'impact plus élevée, dans lequel
les informations de mesure possible (3) contiennent des informations indiquant un rôle et une gravité d'impact de chaque composant pour mettre en œuvre une mesure spécifique de composant, et dans lequel
le processeur (11) est configuré pour déterminer des mesures spécifiques de sous-système pour un sous-système inclus dans le système et des mesures spécifiques de composant pour des composants inclus dans le sous-système à partir des combinaisons extraites, sur la base de résultats de comparaison de premières contraintes et de troisièmes contraintes pour le sous-système, de résultats de comparaison de deuxièmes contraintes et de quatrièmes contraintes pour chacun des composants inclus dans le sous-système, et de résultats de comparaison d'un rôle et d'une gravité d'impact de chacun des composants indiqués dans les informations de rôle (80) et de rôles et de gravités d'impact chacun des composants indiqués dans les informations de mesure possible (3).

2. Appareil de détermination de mesure de sécurité (1) selon la revendication 1, dans lequel
la mémoire (12, 13) contient un flux de données (50) indiquant des données de commande et/ou des données de communication pour les composants inclus dans le système, et dans lequel
le processeur (11) est configuré pour :
identifier au moins un élément parmi une taille de données, une fréquence de communication, et un protocole de communication des données de commande et/ou des données de communication ; et
identifier les rôles dans le système des composants inclus dans le système sur la base de ladite au moins une condition prédéterminée concernant ledit au moins un composant, et stocker les informations concernant les rôles identifiés dans les informations de rôle (80).

3. Appareil de détermination de mesure de sécurité (1) selon la revendication 1, dans lequel
le processeur (11) est configuré pour générer des données pour afficher des informations indiquant le sous-système et les composants pour mettre en œuvre les mesures spécifiques de sous-système et mesures spécifiques de composant déterminées.

4. Appareil de détermination de mesure de sécurité (1) selon la revendication 1, dans lequel
chaque composant a un OS (système d'exploitation), un CPU (unité centrale de traitement) , et une mémoire (12, 13), dans lequel
chacune des premières contraintes et des troisièmes contraintes inclut au moins l'une ou l'autre d'une contrainte concernant le taux de sortie d'un sous-système ou d'une contrainte concernant le cycle de commande d'un sous-système, et dans lequel
chacune des deuxièmes contraintes et des quatrièmes contraintes inclut l'une au moins d'une contrainte concernant le type de l'OS d'un composant, d'une contrainte concernant une capacité du CPU d'un composant, d'une contrainte concernant la capacité de la mémoire (12, 13) d'un composant, et d'une contrainte concernant le cycle de commande d'un composant.

5. Appareil de détermination de mesure de sécurité (1) selon la revendication 1, dans lequel
la mémoire (12, 13) contient des informations système (30) incluant des composants liés les uns aux autres dans le système, dans lequel,
dans un cas où il est déterminé qu'il existe une combinaison d'une mesure spécifique de sous-système applicable à un sous-système inclus dans le système et d'une mesure spécifique de composant non applicable à un composant inclus dans le sous-système dans les combinaisons extraites à titre de résultat de détermination sur la base des résultats de comparaison des premières contraintes et des troisièmes contraintes et des résultats de comparaison des deuxièmes contraintes et des quatrièmes contraintes,
le processeur (11) est configuré pour :
déterminer une mesure inter-composants à mettre en œuvre dans un chemin entre le composant et un composant en lien avec celui-ci dans les informations système (30) pour adresser la première exigence ; et
générer des données pour afficher des informations indiquant la mesure inter-composants déterminée, et dans lequel
des mesures inter-composants sont prédéterminées pour des exigences individuelles.

6. Procédé de détermination de mesure de sécurité par l'intermédiaire d'un appareil de détermination de mesure de sécurité (1), dans lequel
l'appareil de détermination de mesure de sécurité (1) inclut un processeur (11) et une mémoire (12, 13), dans lequel
la mémoire (12, 13) contient :
des informations de règles (2) indiquant des exigences en accord avec des règles de sécurité à satisfaire par un système à sécuriser ;
des informations de conditions de contrainte (60) indiquant des premières contraintes concernant des états de fonctionnement associés à des soussystèmes inclus dans le système et des deuxièmes contraintes concernant des spécifications associées à des composants inclus dans le système ; et
des informations de mesure possible (3) indiquant des combinaisons pour satisfaire aux exigences, chaque combinaison incluant une mesure spécifique de sous-système d'une mesure pour un sous-système et une mesure spécifique de composant d'une mesure pour un sous-système, des troisièmes contraintes à satisfaire par le sous-système pour mettre en œuvre la mesure spécifique de sous-système, et des quatrièmes contraintes à satisfaire par le composant pour mettre en œuvre la mesure spécifique de composant, et
des informations de rôle (80) indiquant des rôles dans le système des composants inclus dans le système et des gravités d'impact sur le système des composants, dans lequel
les informations de mesure possible (3) contiennent des informations indiquant un rôle et une gravité d'impact de chaque composant pour mettre en œuvre une mesure spécifique de composant,
le procédé de détermination de mesure de sécurité comprenant les étapes consistant à :
recevoir, via le processeur (11), une désignation d'une première exigence ;
extraire, via le processeur (11), des combinaisons pour adresser la première exigence à partir des informations de mesure possible (3) ;
déterminer, via le processeur (11), des mesures spécifiques de sous-système pour un sous-système inclus dans le système et des mesures spécifiques de composant pour des composants inclus dans le sous-système à partir des combinaisons extraites, sur la base de résultats de comparaison de premières contraintes et de troisièmes contraintes pour le sous-système, de résultats de comparaison de deuxièmes contraintes et de quatrièmes contraintes pour chacun des composants inclus dans le sous-système, et de résultats de comparaison d'un rôle et d'une gravité d'impact de chacun des composants indiqués dans les informations de rôle (80) et de rôles et de gravités d'impact de chacun des composants indiqués dans les informations de mesure possible (3) ;
sélectionner, via le processeur (11), une mesure spécifique de sous-système est une mesure spécifique de composant à partir des mesures spécifiques de sous-système et mesures spécifiques de composant déterminées sur la base d'un rang de priorité de chaque composant pour mettre en œuvre une mesure spécifique de composant, le rang de priorité étant déterminé en accord avec des politiques prédéfinies concernant les rôles et les gravités d'impact, le rang de priorité étant déterminé en dépendance de la combinaison d'un rôle et d'une gravité d'impact et les politiques prédéterminées étant définies pour associer une priorité plus élevée à une gravité d'impact plus élevée ; et
générer, via le processeur (11), des données pour afficher des informations indiquant les mesures spécifiques de sous-système et mesures spécifiques de composant déterminées.
